Europäisches Patentamt

European Patent Office

Office européen des brevets

(19)

(11) **EP 1 558 033 A1**

(12) **EUROPEAN PATENT APPLICATION**

(43) Date of publication:
**27.07.2005 Bulletin 2005/30**

(51) Int Cl.⁷: **H04N 7/01**

(21) Application number: **04090021.9**

(22) Date of filing: **21.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **DEUTSCHE THOMSON-BRANDT GMBH**
**78048 Villingen-Schwenningen (DE)**

(72) Inventors:
• **Herpel, Carsten**
  **30974 Wennigsen (DE)**
• **Keesen, Heinz-Werner**
  **30173 Hannover (DE)**
• **Schewzow, Andrej**
  **30163 Hannover (DE)**
• **Winter, Marco**
  **30173 Hannover (DE)**

(74) Representative: **Hartnack, Wolfgang, Dipl.-Ing.**
**Deutsche Thomson-Brandt GmbH**
**European Patent Operations**
**Karl-Wiechert-Allee 74**
**30625 Hannover (DE)**

(54) **Method and apparatus for controlling the insertion of additional fields or frames into a picture sequence to change its format**

(57)    The major TV systems in the world use interlaced scanning and either 50Hz field frequency or 60Hz field frequency. However, movies are produced in 24Hz frame frequency and progressive scanning, which format will be used for future digital video discs to be sold in 50Hz countries. In 50Hz display devices the disc content is presented with the original audio pitch but with repeated video frames or fields in order to achieve on average the original video source speed. However, the frame or field insertion is not carried out in a regular pattern but adaptively in order to reduce visible motion judder.

FRD

$t_n$  $t_n+1$  Indicates temporal location at which duplicated frame is inserted  $t_n+10$  $t_n+20$  t[sec]

**Fig.7a**

Printed by Jouve, 75001 PARIS (FR)

EP 1 558 033 A1

Fig.7b

**Description**

The invention relates to a method and to an apparatus for controlling the insertion of additional fields or frames into a first format picture sequence having e.g. 24 progressive frames per second in order to construct therefrom a second format picture sequence having e.g. 25 frames per second.

Background

The major TV systems in the world use interlaced scanning and either 50Hz field frequency (e.g. in Europe and China for PAL and SECAM) or 60Hz or nearly 60Hz field frequency (e.g. in USA and Japan for NTSC), denoted 50i and 60i, respectively. However, movies are produced in 24Hz frame frequency and progressive scanning, denoted 24p, which value when expressed in interlace format would correspond to 48i.

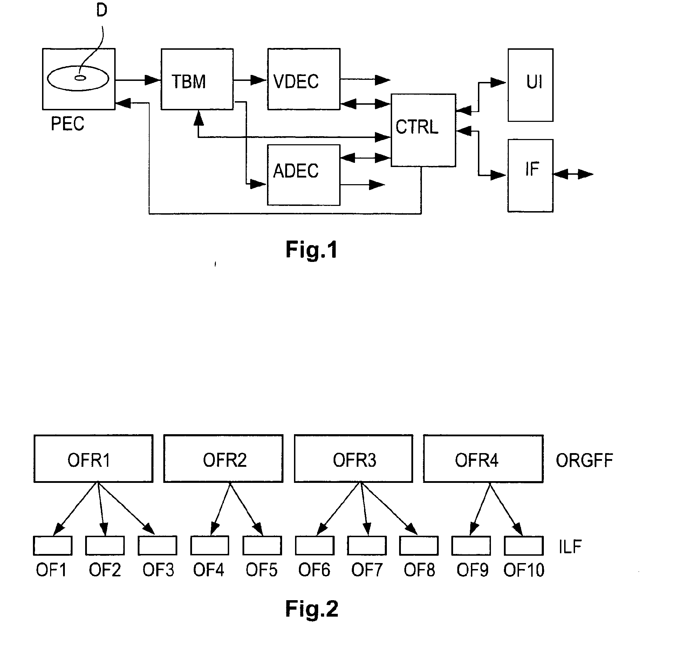

At present, conversion of 24p movie to 60Hz interlaced display is handled by '3:2 pull-down' as shown in Fig. 2, in which 3:2 pull-down one field is inserted by field repetition every five fields. Interlaced fields ILF are derived from original film frames ORGFF. From a first original film frame OFR1 three output fields OF1 to OF3 are generated, and from a third original film frame OFR3 three output fields OF6 to OF8 are generated. From a second original film frame OFR2 two output fields OF4 and OF5 are generated, and from a fourth original film frame OFR4 two output fields OF9 and OF10 are generated, and so on.

It is desirable that distribution media do have a single-format video and audio track which are playable worldwide rather than the current situation where at least a 50Hz and a 60Hz version exist of each packaged media title, e.g. DVD. Because many sources consist of 24 fps (frames per second) film, this 24p format is preferably the desired format for such single-format video tracks, which format therefore needs to be adapted at play-back time for displaying correctly on display devices, both, in the 50Hz and in the 60Hz countries.

The following solutions are known for 24p to 25p or 50i conversion or, more general, to 25 fps conversion:

- Replaying 4.2% faster: this changes the content length and requires expensive real-time audio pitch conversion and is therefore not applicable for consumer products. It is true that current movie broadcast and DVD do apply this solution for video, but the required audio speed or pitch conversion is already dealt with at the content provider's side so that at consumer's side no audio pitch conversion is required. DVD Video discs sold in 50Hz countries contain audio data streams that are already encoded such that the DVD player's decoder automatically outputs the correct speed or pitch of the audio signal.
- Applying a regular field/frame duplication scheme: this solution leads to unacceptable regular motion judder and, hence, is not applied in practise.
- Applying motion compensated frame rate conversion: this is a generic solution to such conversion problems which is very expensive and, hence, is not applicable for consumer products.

Invention

At present, conversion of original 24p format movie video and audio data streams to 50Hz interlaced display is carried out by replaying the movie about 4% faster. This means, however, that in 50Hz countries the artistic content of the movie (its duration, pitch of voices) is modified. Field/frame repetition schemes similar to 3:2 pull-down are not used since they show unacceptable motion judder artefacts when applied in a regular manner, such as inserting one extra field every 12 frames.

A problem to be solved by the invention is to provide a field or frame insertion scheme for conversion from 24p format to 25 fps format in an improved manner thereby minimising motion judder artefacts. This problem is solved by the method disclosed in claim 1. An apparatus that utilises this method is disclosed in claim 2.

The characteristics of a current movie scene such as global motion, brightness/intensity level and scene change locations are evaluated in order to apply duplicated or repeated frames/fields at subjectively non-annoying locations. In other words, the invention uses relatively easily available information about the source material to be converted from 24p to 25 fps for adaptively inserting repeated fields/frames at non-equidistant locations where the resulting insertion artefacts are minimum.

Advantageously, the invention can be used for all frame rate conversion problems where there is a small difference between source frame rate and destination frame rate. If these frame rates differ a lot, such as in 24 fps to 30 fps conversion, there is hardly any freedom left for shifting in time fields or frames to be repeated.

The invention facilitates computationally inexpensive conversion from 24 fps to 25 fps format picture sequences (example values) with minimised motion judder.

In principle, the inventive method is suited for controlling the insertion of additional fields or frames into a first format picture sequence in order to construct therefrom a second format picture sequence the frame frequency of which is constant and is greater than that of the first format picture sequence, the method including the steps:

- determining locations of fields or frames in said first format picture sequence at which locations the insertion of a corresponding additional field or frame causes a minimum visible motion judder in said second format picture sequence;
- inserting in said first format picture sequence a field or a frame at some of said locations at non-regular field or frame insertion distances such that in total the average distance between any adjacent frames corresponds to that of said second format picture sequence;
- presenting said first format picture sequence together with said non-regularly inserted fields and/or frames in the format of said second format picture sequence.

In principle the inventive apparatus is suited for controlling the insertion of additional fields or frames into a first format picture sequence in order to construct therefrom a second format picture sequence the frame frequency of which is constant and is greater than that of the first format picture sequence, said apparatus including means that are adapted

for determining locations of fields or frames in said first format picture sequence at which locations the insertion of a corresponding additional field or frame causes a minimum visible motion judder in said second format picture sequence,

and for inserting in said first format picture sequence a field or a frame at some of said locations at non-regular field or frame insertion distances such that in total the average distance between any adjacent frames corresponds to that of said second format picture sequence,

and for presenting said first format picture sequence together with said non-regularly inserted fields and/or frames in the format of said second format picture sequence.

Advantageous additional embodiments of the invention are disclosed in the respective dependent claims.

Drawings

Exemplary embodiments of the invention are described with reference to the accompanying drawings, which show in:

Fig. 1      Simplified block diagram of an inventive disc player;
Fig. 2      Application of 3:2 pull-down on a 24p source picture sequence to provide a 60i picture sequence;
Fig. 3      Regular pattern of repeated frames;
Fig. 4      Regular pattern of repeated fields;
Fig. 5      Time line for regular frame repetition according to Fig. 3;
Fig. 6      Example motion judder tolerance values of a video sequence;
Fig. 7      Example irregular temporal locations for field or frame repetition and the resulting varying presentation delay;
Fig. 8      Frame or field repetition distance expressed as a function of video delay and motion judder tolerance;
Fig. 9      The frame or field repetition distance function of Fig. 8 whereby the maximum and minimum video delays depend on the required degree of lip-sync;
Fig. 10     24 fps format frames including a repeated frame without motion compensation;
Fig. 11     25 fps format frame output related to Fig. 10;
Fig. 12     24 fps format frames including a repeated frame with motion compensation;
Fig. 13     25 fps format frame output related to Fig. 12.

Exemplary embodiments

In Fig. 1 a disk drive including a pick-up and an error correction stage PEC reads a 24p format encoded video and audio signal from a disc D. The output signal passes through a track buffer and de-multiplexer stage TBM to a video decoder VDEC and an audio decoder ADEC, respectively. A controller CTRL can control PEC, TBM, VDEC and ADEC. A user interface UI and/or an interface IF between a TV receiver or a display (not depicted) and the disc player are used to switch the player output to either 24 fps mode or 25 fps mode. The interface IF may check automatically which mode or modes the TV receiver or a display can process and present. The replay mode information is derived automatically from feature data (i.e. data about which display mode is available in the TV receiver or the display) received by interface IF that is connected by wire, by radio waves or optically to the TV receiver or the display device. The feature data can be received regularly by said interface IF, or upon sending a corresponding request to said TV receiver or a display device. As an alternative, the replay mode information is input by the user interface UI upon displaying a corresponding request for a user. In case of 25 fps output from the video decoder VDEC the controller CTRL, or the video decoder VDEC itself, determines from characteristics of the decoded video signal at which temporal locations a field or a frame is to be repeated by the video decoder. In some embodiments of the invention these temporal locations are also controlled by the audio signal or signals coming from audio decoder ADEC as explained below.

Instead of a disc player, the invention can also be used in other types of devices, e.g. a digital settop box or a digital TV receiver, in which case the front-end including the disk drive and the track buffer is replaced by a tuner for digital signals.

Fig. 3 shows a regular pattern of repeated frames wherein one frame is repeated every 24 frames, i.e. at $t_n$, $t_n+1$, $t_n+2$, $t_n+3$, etc. seconds, for achieving a known 24p to 25 fps conversion.

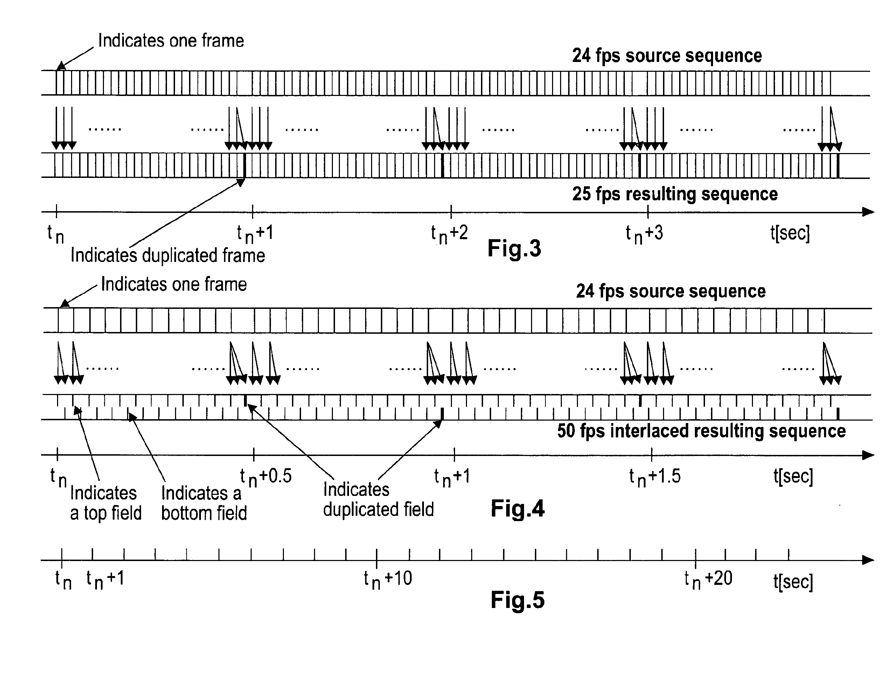

Fig. 4 shows a regular pattern of repeated fields wherein one field is repeated every 24 fields, i.e. at $t_n$, $t_n+0.5$, $t_n+1$, $t_n+1.5$, $t_n+2$, etc. seconds, for achieving a known 24p to 25 fps conversion. This kind of processing is applicable if the display device has an interlaced output. The number of locations on the time axis where judder occurs are doubled, but the intensity of each 'judder instance' is halved as compared to the frame repeat. Top fields are derived from the first, third, fifth, etc. line of the indicated frame of the source sequence and bottom fields are derived from the second, fourth, sixth, etc. line of the indicated frame of the source sequence.

Fig. 5 shows a time line for regular frame repetition according to Fig. 3, with markers at the temporal locations $t_n$, $t_n+1$, $t_n+2$, $t_n+3$, etc. seconds where frame repetition occurs.

For carrying out the inventive adaptive insertion of repeated fields or frames at non-equidistant (or irregular) locations corresponding control information is required. Content information and picture signal characteristics about the source material become available as soon as the picture sequence is compressed by a scheme such as MPEG-2 Video, MPEG-4 Video or MPEG-4 Video part 10, which supposedly will be used not only for current generation broadcast and packaged media such as DVD but also for future media such as disks based on blue laser technology. Picture signal characteristics or information that is useful in the context of this invention are:

- the motion vectors generated and/or transmitted,
- scene change information generated by an encoder,
- average brightness or intensity information, which can be derived from analysing DC transform coefficients,
- average texture strength information, which can be derived from analysing AC transform coefficients.

Such picture signal characteristics can be transferred from the encoder via a disk or via broadcast to the decoder as MPEG user data or private data. Alternatively, the video decoder can collect or calculate and provide such information.

In order to exploit motion vector information, the set of motion vectors MV for each frame is collected and processed such that it can be determined whether a current frame has large visibly moving areas, since such areas suffer most from motion judder when duplicating frames or fields. To determine the presence of such areas the average absolute vector length AvgMVi can be calculated for a frame as an indication for a panning motion:

$$AvgMV_i = \frac{1}{VX \cdot VY} \sum_{x=0}^{VX-1} \sum_{y=0}^{VY-1} \left| MV_{x,y} \right| \qquad (1)$$

with 'i' denoting the frame number, 'VX' and 'VY' being the number of motion vectors in x (horizontal) and y (vertical) direction of the image. Therefore, VX and VY are typically obtained by dividing the image size in the respective direction by the block size for motion estimation.

If motion vectors within one frame point to different reference frames at different temporal distance to the current frame, a normalising factor RDistx,y for this distance is required in addition:

$$AvgMV_i = \frac{1}{VX \cdot VY} \sum_{x=0}^{VX-1} \sum_{y=0}^{VY-1} \frac{\left| MV_{x,y} \right|}{RDist_{x,y}} \qquad (2)$$

In another embodiment using more complex processing, a motion segmentation of each image is calculated, i.e. one or more clusters of adjacent blocks having motion vectors with similar length and direction are determined, in order to detect multiple large-enough moving areas with different motion directions. In such case the average motion vector can be calculated for example by:

$$AvgMV_i = \frac{\sum_{c=1}^{nClusters} AvgMV_c \cdot ClusterSize_c}{\sum_{c=1}^{nClusters} ClusterSize_c}$$ , $$\qquad (2a)$$

wherein AvgMVc is the average motion vector length for the identified cluster 'c'.

Advantageously this approach eliminates the effect of motion vectors for randomly moving small objects within an image that are not member of any identified block cluster motion and that do not contribute significantly to motion judder visibility.

The processing may take into account as weighting factors for $AvgMV_i$ whether the moving areas are strongly textured or have sharp edges, as this also increases visibility of motion judder. Information about texture strength can be derived most conveniently from a statistical analysis of transmitted or received or replayed AC transform coefficients for the prediction error. In principle, texture strength should be determined from analysing an original image block, however, in many cases such strongly textured blocks after encoding using motion compensated prediction will also have more prediction error energy in their AC coefficients than less textured blocks. The motion judder tolerance MJT at a specific temporal location of the video sequence can, hence, be expressed as:

$$MJT = f(AvgMV, \text{texture strength, edge strength}) \qquad (3)$$

with the following general characteristics:

- Given fixed values of texture strength and edge strength, MJT is proportional to 1/AvgMV;
- Given fixed values of AvgMV and edge strength, MJT is proportional to 1/(texture strength);
- Given fixed values of AvgMV and texture strength, MJT is proportional to 1/(edge strength).

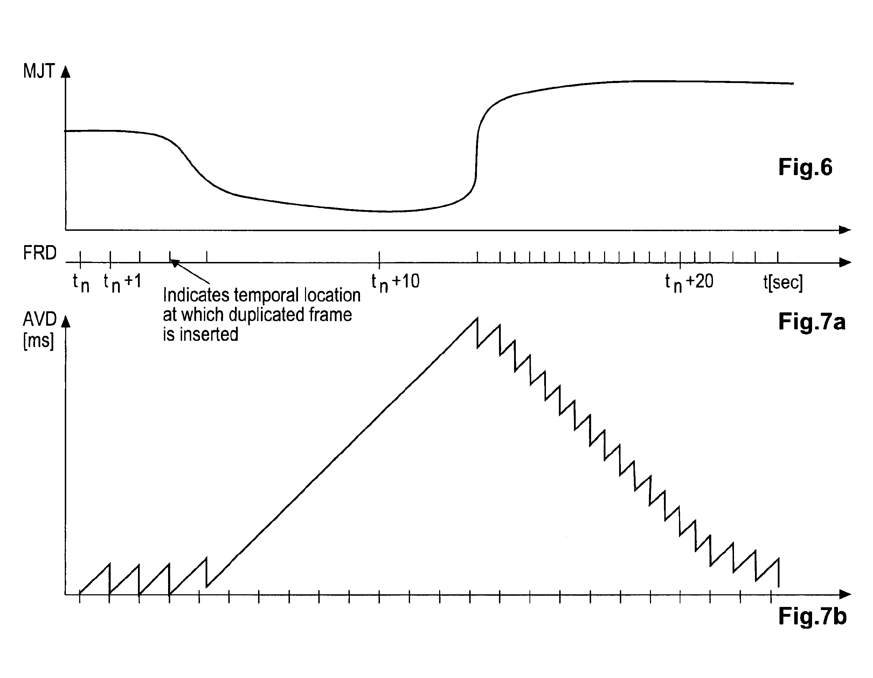

Fig. 6 shows example motion judder tolerance values MJT(t) over a source sequence.

Preferably the current size of the motion judder tolerance value influences the distribution, as depicted in Fig. 7a, of inserted repeated frames or fields into the resulting 25 fps sequence, i.e. the frame or field repetition distance FRD. Early or delayed insertion of repeated frames causes a negative or positive delay of the audio track relative to the video track as indicated in Fig. 7b, i.e. a varying presentation delay for video. A maximum tolerable video delay relative to audio in both directions is considered when applying the mapping from motion judder tolerance MJT to frame or field repetition distance FRD.

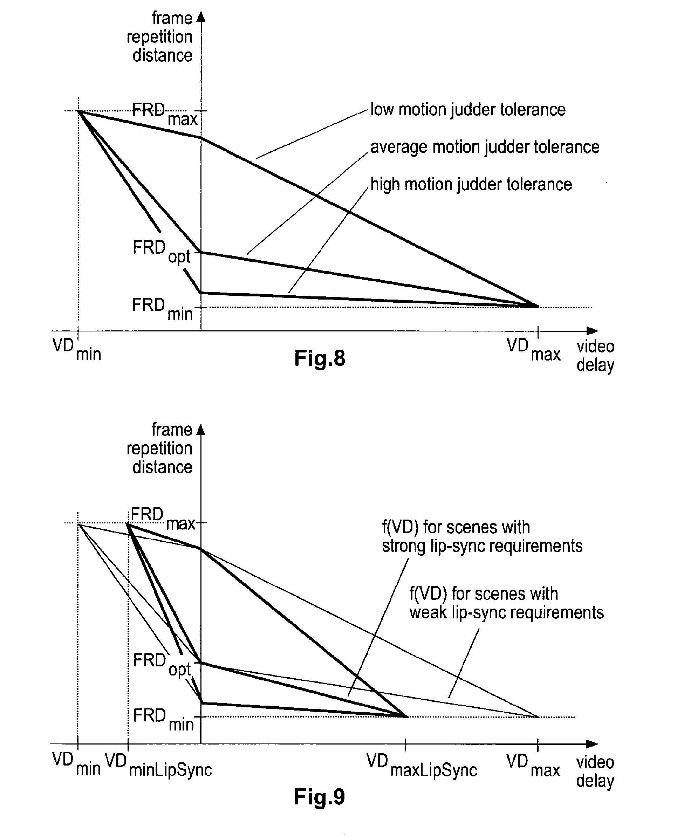

One possible solution for this control problem is depicted in Fig. 8. The frame or field repetition distance FRD is expressed as a function of the video delay VD and the motion judder tolerance MJT:

$$FRD = f(VD, MJT) , \qquad (4)$$

with the following general characteristics:

- Given a fixed value of VD, FRD is proportional to 1/MJT;
- Given a fixed value of MJT, FRD is proportional to 1/VD; This relation can be expressed in a characteristic of FRD = f(VD) that changes depending on the motion judder tolerance value, as is the case in Fig. 8, favouring longer than optimum gaps between inserted repeated frames in case of low motion judder tolerance (e.g. high degree of motion) and favouring shorter than optimum gaps in case of high motion judder tolerance (e.g. lower-than-average degree of motion). The optimum field or frame repetition distance is shown as $FRD_{opt}$. The maximum allowable video delay is shown as VDmax. The maximum allowable video delay in negative direction is shown as VDmin.

Since a short freeze-frame effect at scene change locations is not considered as being annoying, scene change information generated by a video encoder (or by a video decoder) can be used to insert one or more repeated fields or frames at such locations, the number of repetitions depending on the current degree of video delay. For the same reason, repeated fields or frames can be inserted after a fade-to-black sequence, a fade-to-white sequence or a fade to any colour. All such singular locations have a very high MJT value.

Notably repeated frames could be used at such locations even if at other picture content fields only would be repeated in order to reduce motion judder intensity at individual locations. Generally, repeated frames and repeated fields may co-exist in a converted picture sequence.

Typically accepted delay bounds for perceived lip-sync need only be observed if at least one speaker is actually visible within the scene. Hence, the delay between audio and video presentation can become larger than the above-mentioned bounds while no speaker is visible. This is typically the case during fast motion scenes. Hence an additional control can be carried out as shown in Fig. 9, in that the video delay bounds $VD_{min}$ and $VD_{max}$ are switched or smoothly transitioned between:

- lip-sync-acceptable values $VD_{minLipSync}$ and $VD_{maxLipSync}$ if speech or short sound peaks (which are caused by special events like a clapping door) are detected and a slowly moving or static scene is detected;
- larger VD values $VD_{min}$ and $VD_{max}$ otherwise.

A detection of speech can be derived for example in case of the mostly-used multi-channel audio by evaluating the centre channel relative to left and right channels, as speech in movies is mostly coded into the centre channel. If the centre channel shows a bursty energy distribution over time that is significantly different from the energy distribution in the left and right channels, then the likelihood of speech being present is high.

All the above controls for adaptively determining the local frame repetition distance do work for a single-pass through the video sequence. However, the inventive control benefits from a two-pass encoding processing as is carried out in many professional MPEG-2 encoders. In that case the first pass is used to collect the motion intensity curve, scene cut locations and count, number, location and length of scenes which require tight lip-sync, black frames, etc. Then a modified control scheme can be applied that does not only take into account available information for the currently processed frame and its past, but also for a neighbourhood of past and future frames:

$$FRD\ (i) = f(VD, MJT(i-k) ... MJT(i+k))\ ,\tag{5}$$

wherein 'i' denotes the current frame number and 'k' denotes a running number referencing the adjacent frames. A general characteristic of each such function is that FRD increases if MJT(i) is smaller than the surrounding MJT values and decreases if MJT(i) is larger than the surrounding MJT values. Related picture signal characteristics can be transferred as MPEG user data or private data from the encoder via a disk or via broadcast signal to the decoder.

In another embodiment of the invention, under specific circumstances motion compensated interpolation of frames rather than repetition of frames can be applied without computational expense. Such motion compensated interpolation can make use of the transmitted motion vectors for the current frame. In general, these motion vectors are not suitable for motion compensated frame interpolation since they are optimised for optimum prediction gain rather than indicating the true motion of a scene. However, if a decoder analysis of received motion vectors shows that a homogeneous panning of the scene occurs, a highly accurate frame can be interpolated between the current and the previous frame. Panning means that all motion vectors within a frame are identical or nearly identical in length and orientation. Hence an interpolated frame can be generated by translating the previous frame by half the distance indicated by the average motion vector for the current frame. It is assumed that the previous frame is the reference frame for the motion compensated prediction of the current frame and that the interpolated frame is equidistantly positioned between the previous and current frame. If the prediction frame is not the previous frame, adequate scaling of the average motion vector is to be applied.

The corresponding considerations are true for the case where a zoom can be determined from the received motion vectors. A zoom is characterised by zero motion vectors in the zoom centre and increasing length of centre-(opposite)-directed motion vectors around this zoom centre, the motion vector length increasing in relation to the distance from the zoom centre.

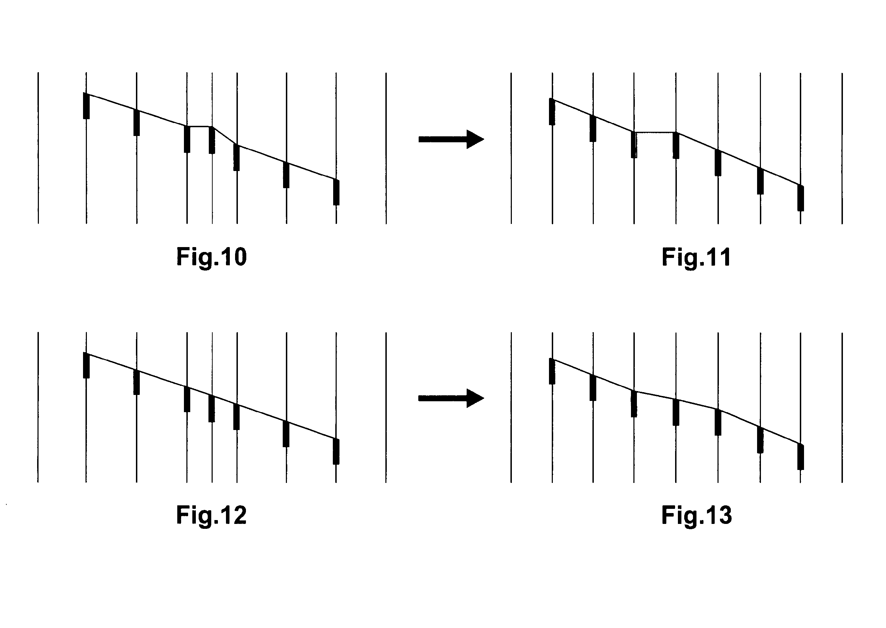

Advantageously this kind of motion compensated interpolation yields an improved motion judder behaviour compared to repeating a frame, as is illustrated in Fig. 10 to 13. Fig. 10 in 24 fps format and Fig. 11 after 25 fps format conversion show frames (indicated as vertical bars) with a motion trajectory for a vertically moving object and one instance of frame repetition, which results in a 'freeze frame'. Fig. 12 shows insertion of a motion interpolated frame which, when presented at the increased 25 fps target frame rate as depicted in Fig. 13, leads to a 'slowly moving frame' rather than a 'freeze frame'.

The above-disclosed controls for frame and/or field repetition and interpolation for frame rate conversion can be applied, both, at the encoder and at the decoder side of an MPEG-2 (or similar) compression system since most side information is available at both sides, possibly except reliable scene change indication.

However, in order to exploit the superior picture sequence characteristics knowledge of the encoder, the locations for fields or frames to be repeated or interpolated can be conveyed in the (MPEG-2 or otherwise) compressed 24 fps video signal. Flags to indicate temporal order of fields (top_field_first) and repetition of the first field for display (repeat_first_field) exist already in the MPEG-2 syntax. If it is required to signal the conversion pattern both for 24 fps to 30 fps and 24 fps to 25 fps conversion for the same video signal, one of the two series of flags may be conveyed in a suitable user data field for each picture.

The values 24 fps and 25 fps and the other numbers mentioned above are example values which can be adapted correspondingly to other applications of the invention.

The invention can be applied for:

- packaged media (DVD, blue laser discs, etc.),
- downloaded media including video-on-demand, near video-on-demand, etc.,
- broadcast media.

The invention can be applied in an optical disc player or in an optical disc recorder, or in a harddisk recorder, e.g. an HDD recorder or a PC, or in a settop box, or in a TV receiver.

**Claims**

1. Method for controlling (CTRL, VDEC) the insertion of additional fields or frames into a first format (24p) picture sequence in order to construct therefrom a second format (25fps) picture sequence the frame frequency of which is constant and is greater than that of the first format picture sequence, **characterised by** the steps:

   - determining (CTRL, VDEC, ADEC) locations of fields or frames in said first format picture sequence at which locations the insertion of a corresponding additional field or frame causes a minimum visible motion judder (MJT) in said second format picture sequence;
   - inserting (CTRL, VDEC) in said first format picture sequence a field or a frame at some of said locations at non-regular field or frame insertion distances (FRD) such that in total the average distance between any adjacent frames corresponds to that of said second format picture sequence;
   - presenting said first format picture sequence together with said non-regularly inserted fields and/or frames in the format of said second format picture sequence.

2. Apparatus for controlling (CTRL, VDEC) the insertion of additional fields or frames into a first format (24p) picture sequence in order to construct therefrom a second format (25fps) picture sequence the frame frequency of which is constant and is greater than that of the first format picture sequence, said apparatus being **characterised by** means (CTRL, VDEC, ADEC) that are adapted for determining locations of fields or frames in said first format picture sequence at which locations the insertion of a corresponding additional field or frame causes a minimum visible motion judder (MJT) in said second format picture sequence, and for inserting in said first format picture sequence a field or a frame at some of said locations at non-regular field or frame insertion distances (FRD) such that in total the average distance between any adjacent frames corresponds to that of said second format picture sequence, and for presenting said first format picture sequence together with said non-regularly inserted fields and/or frames in the format of said second format picture sequence.

3. Method according to claim 1, or apparatus according to claim 2, wherein said first format (24p) picture sequence is stored or recorded on a storage medium (D), e.g. an optical disc or a harddisk, or is broadcast or transferred as a digital TV signal.

4. Apparatus according to claim 2 or 3, said apparatus being an optical disc player or an optical disc recorder, or a harddisk recorder, e.g. an HDD recorder or a PC, or a settop box, or a TV receiver.

5. Apparatus according to one of claims 2 to 4, said apparatus being an optical disc player or an optical disc recorder or a harddisk recorder or a settop box, wherein said apparatus outputs either the original first format (24p) picture sequence or said second format (25fps) picture sequence, which choice is controlled by replay mode information received either automatically from an interface (IF) that is connected to a device including a display device, or is received from a user interface (UI).

6. Method according to claim 1 or 3, or apparatus according to one of claims 2 to 5, wherein said first format (24p) picture sequence has a frame frequency of essentially 24Hz and said second format (25fps) picture sequence has a frame frequency of 50Hz.

7. Method according to one of claims 1, 3 or 6, or apparatus according to one of claims 2 to 6, wherein said field or frame insertion locations in said first format picture sequence are frames or fields that do not contain large moving picture content areas, the motion being determined by evaluating motion vectors.

8. Method according to one of claims 1, 3, 6 or 7, or apparatus according to one of claims 2 to 7, wherein said field or frame insertion locations in said first format picture sequence are frames or fields at which scene changes or a fade-to-black or a fade-to-white or a fade to any colour occurs.

9. Method according to one of claims 1, 3 or 6 to 8, or apparatus according to one of claims 2 to 8, wherein said field or frame insertion locations in said first format picture sequence are controlled such that in said second format picture sequence the maximum picture content delay caused by the insertion irregularity is kept smaller than average in case a slowly moving or static scene and speech or sound peaks in the audio information assigned to said first format picture sequence are detected.

10. Method according to one of claims 1, 3 or 6 to 9, or apparatus according to one of claims 2 to 9, wherein the inserted fields or frames are motion compensated before being output in said second format picture sequence.

**Fig.1**

**Fig.2**

Indicates one frame

24 fps source sequence

25 fps resulting sequence

Indicates duplicated frame

$t_n$ $t_n+1$ $t_n+2$ $t_n+3$ t[sec]

**Fig.3**

Indicates one frame

24 fps source sequence

50 fps interlaced resulting sequence

Indicates duplicated field

Indicates a bottom field

Indicates a top field

$t_n$ $t_n+0.5$ $t_n+1$ $t_n+1.5$ t[sec]

**Fig.4**

$t_n$ $t_n+1$ $t_n+10$ $t_n+20$ t[sec]

**Fig.5**

Fig.6

Fig.7a

Fig.7b

Indicates temporal location
at which duplicated frame
is inserted

$t_n$ $t_n+1$ $t_n+10$ $t_n+20$ t[sec]

MJT

FRD

AVD
[ms]

Fig.8

Fig.9

Fig.10

Fig.11

Fig.12

Fig.13

**European Patent Office**

## EUROPEAN SEARCH REPORT

Application Number

EP 04 09 0021

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99/52281 A (KIEU CONG TOAI ; POIRIER DANIEL (CA); LE DINH CHON TAM (CA); MIRANDA T) 14 October 1999 (1999-10-14) * page 4, line 10 - line 19 * * page 5, line 1 - line 22 * ----- | 1-10 | H04N7/01 |

TECHNICAL FIELDS SEARCHED (Int.Cl.7)

H04N

The present search report has been drawn up for all claims

| Place of search | Date of completion of the search | Examiner |
|---|---|---|
| The Hague | 16 June 2004 | Beaudoin, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 09 0021

This annex lists the patent family members relating to the patent documents cited in  the above-mentioned European search report.
The members are as contained in the European Patent Office EDP file on
The European Patent Office is in no way liable for these particulars which are merely  given for the purpose of information.

16-06-2004

| Patent document cited in search report | | Publication date | Patent family member(s) | | Publication date |
|---|---|---|---|---|---|
| WO 9952281 | A | 14-10-1999 | AU | 3021999 A | 25-10-1999 |
| | | | CA | 2326214 A1 | 14-10-1999 |
| | | | CA | 2423869 A1 | 14-10-1999 |
| | | | WO | 9952281 A2 | 14-10-1999 |
| | | | EP | 1207693 A2 | 22-05-2002 |
| | | | EP | 1084577 A1 | 21-03-2001 |
| | | | JP | 2002510946 T | 09-04-2002 |
| | | | US | 6181382 B1 | 30-01-2001 |